# EUROPEAN PATENT SPECIFICATION

(11) **EP 0 621 091 B1**
(45) Date of publication and mention of the grant of the patent: **11.06.1997**
(21) Application number: 94200743.6
(22) Date of filing: 22.03.1994
(51) Int. Cl.: B21D 26/02

(54) **A method of forming a tubular member**
Verfahren zum Formen eines rohrförmigen Elementes
Procédé pour former un élément tubulaire

(30) Priority: 19.04.1993 US 47418; 19.04.1993 US 48016
(43) Date of publication of application: 26.10.1994
(73) Proprietor: GENERAL MOTORS CORPORATION, Detroit Michigan 48202 (US)
(72) Inventor: Shah, Sanjay Mahasukhlal, Rochester Hills, Michigan 48307 (US); Lovell, Michael Harry, Leonard, Michigan 48367 (US)
(74) Representative: Denton, Michael John

(56) References cited:
- EP-A- 0 195 157
- GB-A- 2 244 228
- US-A- 4 829 803
- US-A- 5 070 717

## Description

This invention relates to a method of forming a shaped tubular member using internal hydraulic pressure, and a die assembly therefor.

It is known to form the cross-sectional profile of a tubular member by a hydroforming process in which a tubular blank is placed within a die and hydraulic fluid pressure is applied to the interior of the tubular blank to expand the tubular blank into the shape defined by the die cavity. The hydroforming process is particularly useful for transforming a commercially available round tubular shape into an elongated box shape tubular frame member of the type useful in the manufacture of automobile vehicle body and chassis.

The prior art has recognised that the circumferential expansion of the tubular blank is limited to about 2-5% (without significantly thinning the tube) when using readily available commercial grades of tubular steel. Accordingly, the circumferential measure of the tubular blank can be only about 2-5% less than the circumferential measure of the box shape end product so that closing the box shape cavity of the hydroforming dies about the round tubular blank is akin to the proverbial problem of forcing a round peg into a square hole.

US-A-5070717 discloses a method of forming a tubular member from a tubular round blank including the steps of providing a pair of dies each of which has a cavity, the cavities, on closing of the dies, defining a cavity portion having the approximate cross-sectional shape of the tubular member; positioning the blank in one of the cavities; moving the dies to the closed position to collapse the blank into the cavity portion; and applying internal pressure to the collapse blank to form the tubular member.

A method in accordance with the present invention is defined by the combination of the features specified in Claim 1. A die assembly according to the present invention is defined in claim 4.

The present invention provides an improved hydroforming die assembly and method by which a round tubular blank having a diameter greater than the width of the desired finish product can be placed into the hydroforming die assembly, the die assembly closed to force the tubular blank into a shaped cavity portion, and then hydraulic pressure employed to expand the collapsed tubular blank into the shape defined by the cavity portion.

The present invention also provides a die assembly of economical manufacture and low maintenance.

In the method of the present invention, the first and second dies cooperate on closing to force the tubular blank downwardly into the forming portion while the angularly disposed walls of the entry portion guide the tubular blank to collapse in a manner preventing pinching of the tubular blank between the dies. The first die preferably includes rounded corners at the intersection of side walls and a bottom wall to provide rounded corners on the tubular member. However, the edge surfaces of the lid wall of the upper die may be rounded in the reverse direction away from the side walls of the forming portion for ease of die manufacture, in which case the rounded corners of the tubular member are provided by controlling the magnitude of internal hydraulic pressure to a level sufficient to properly expand the tubular blank against the side walls, the bottom wall, the lid wall, and the lower corners, while not so great as to force the upper corners fully into the reverse rounded upper corners of the die cavity.

The present invention will now be described, by way of example, with reference to the accompanying drawings, in which:-
Figure 1 is a perspective view of a tubular member which is a U-shaped engine cradle frame member manufactured according to this invention;
Figure 2 is a sectional view taken across the tubular member of Figure 1 showing the generally box shaped profile of the tubular member;
Figure 3 is a cross section through a round tubular blank from which the tubular member of Figure 1 is to be manufactured;
Figure 4 is a cross-sectional view taken through a die assembly showing an upper die in an opened position relative a lower die and showing the round tubular blank of Figure 3 resting on the lower die;
Figure 5 is a similar view to Figure 4 and shows the upper die being lowered toward a closed position relative the lower die and forcing the round tubular blank into a box shape cavity in the lower die;
Figure 6 is a similar view to Figure 5 and shows the upper die having been fully closed;
Figure 7 is a similar view to Figure 6 but showing the tubular member after the application of internal hydraulic pressure has expanded the tube to its final cross section of Figure 2;
Figure 8 is an enlarged fragmentary view of the upper die; and
Figure 9 is a view similar to Figure 8 but showing an alternative construction of the upper die.

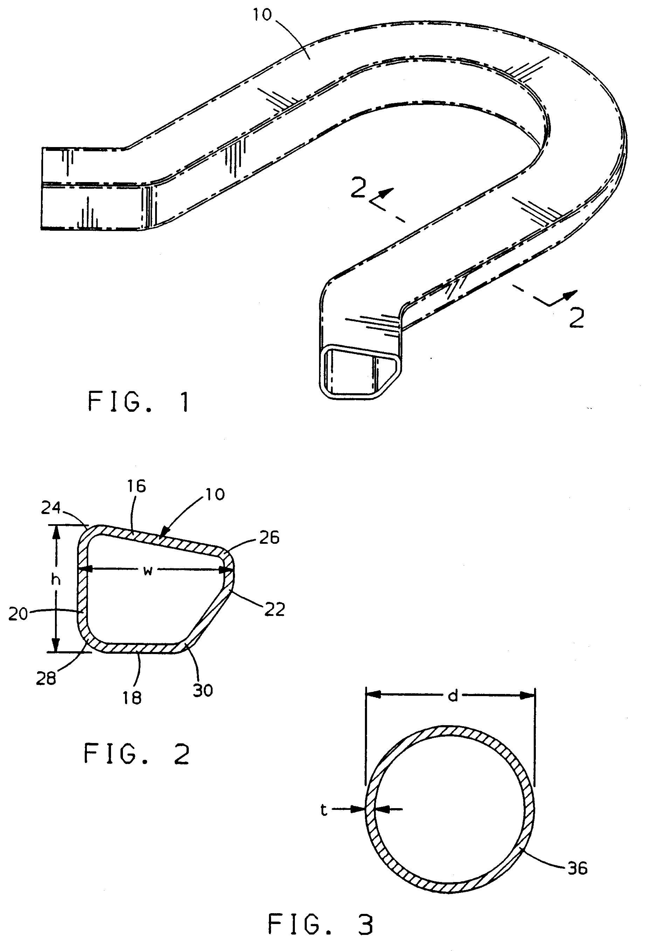

Referring to Figure 1 there is shown a hydroformed tubular member 10 for a motor vehicle. The tubular member 10 is generally U-shaped and has a cross-sectional profile shown in Figure 2.

As seen in Figure 2, the tubular member 10 includes a top wall 16 and a bottom wall 18 connected together by spaced apart side walls 20 and 22.

The top wall 16 is connected to the side walls 20 and 22 by rounded corners 24 and 26. The bottom wall 18 is connected to side walls 21 and 22 by rounded corners 28 and 30. The cross section of Figure 2 has an overall width designated "w" and a depth designated "h". Thus the tubular member 10 has a quadrilateral tubular cross sectional shape, such as a conventional square, rectangular or more irregular quadrilateral or polygon shape such as the cross section of Figure 2. The quadrilateral shape provides flat surfaces so that brackets, etc. may be welded to flat surfaces instead of the round surfaces provided by rounded or elliptical cross sections.

Figure 3 shows a round tubular blank 36 from which the tubular member 10 is to be manufactured. The round tubular blank 36 has a diameter designated "d" and a wall thickness "t". In comparing the round blank 36 of Figure 3 with the hydroformed member of Figure 2, it will be appreciated that the diameter "d" of the tubular blank 36 is greater than the width "w" of the tubular member 10. The circumference of the cross section at Figure 2 is about 5% greater than the circumference of the tubular blank 36 of Figure 3 as will be discussed further hereinafter. The round tubular blank 36 is bent to the general U-shape of Figure 1 using conventional tube bending techniques.

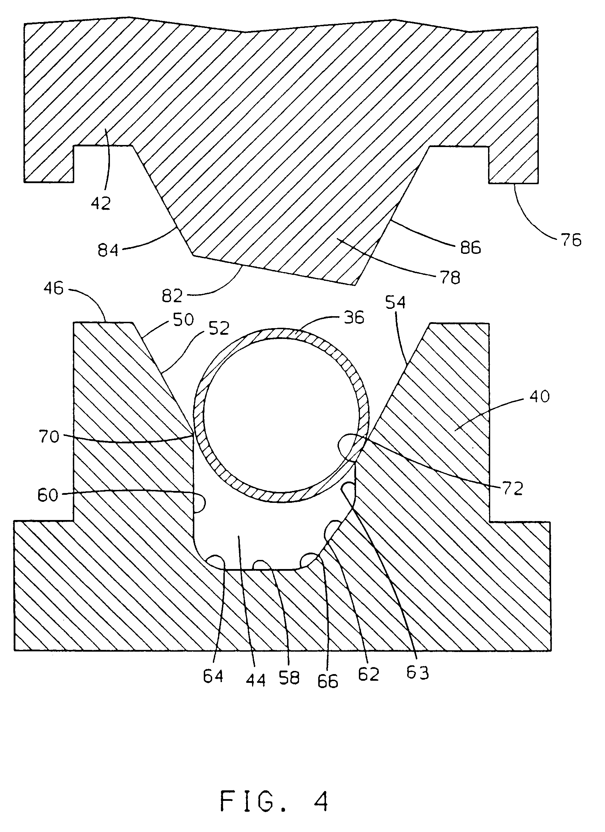

Referring to Figure 4, it is seen that a lower (first) die 40 has a cavity 44 which extends longitudinally along the length of the lower die 40 and is submerged within the lower die 40 below the top surface 46 of thereof. The cavity 44 opens upwardly to a top surface 46 by angularly disposed funnel walls 52 and 54 defining an entry opening 50. The cavity 44 includes a bottom wall 58 and side walls 60 and 62,63. A concave rounded corner 64 smoothly joins the bottom wall 58 and side wall 60. Likewise, a concave rounded corner 66 smoothly joins the bottom wall 58 with the side wall 62. The side walls 60 and 63 are angled away from one another by about one degree to facilitate the eventual removal of a hydroformed tube from the cavity 44. Thus, as seen in Figure 4, the overall depth of the cavity 44 in the lower die 40 is greater than the desired height "h" of the tubular member and includes a lowermost forming portion and an uppermost entry portion defined by the angularly disposed funnel walls 52 and 54 of the entry opening 50.

As seen in Figure 4, the side wall 60 of the cavity 44 intersects the funnel wall 52 at an apex 70. Likewise the side wall 63 of the cavity intersects with the funnel wall 54 at an apex 72.

Figure 4 also shows the tubular blank 36 having been placed in the entry opening 50 of the lower die 40. Because the diameter "d" of the tubular blank 36 is greater than the width "w" of the forming portion of the forming cavity 44 and the cross section of Figure 2, the tubular blank rests within the entry opening 50 and is supported on the funnel walls 52 and 54 generally at the apex points 70 and 72.

Figure 4 also shows an upper (second) die 42 which has a bottom face 76 and a ram 78 which extends longitudinally along the lower face 76 of the upper die and projects downwardly therefrom in registry with the entry opening 50 of the lower die 40. The ram 78 includes a lid wall 82 and angularly disposed ram walls 84 and 86. In the closed position of the dies 40,42, the lid wall 82 defines with the walls 58,60,62,64 of the forming portion a cavity portion which has substantially the same cross-sectional shape and size as the cross-section of the tubular member 10.

Figure 5 shows the upper die 42 being lowered upon the lower die 40. As seen in Figure 5, the lid wall 82 of the upper die 42 has moved down into engagement with the top the tubular blank 36 and is forcing the tubular blank 36 downwardly into the forming portion of the forming cavity 44. During this lowering of the lid wall 82, the angularly converging funnel walls 52 and 54 work to shoehorn the diameter "d" of the tubular blank 36 into the lesser width "w" of the forming portion.

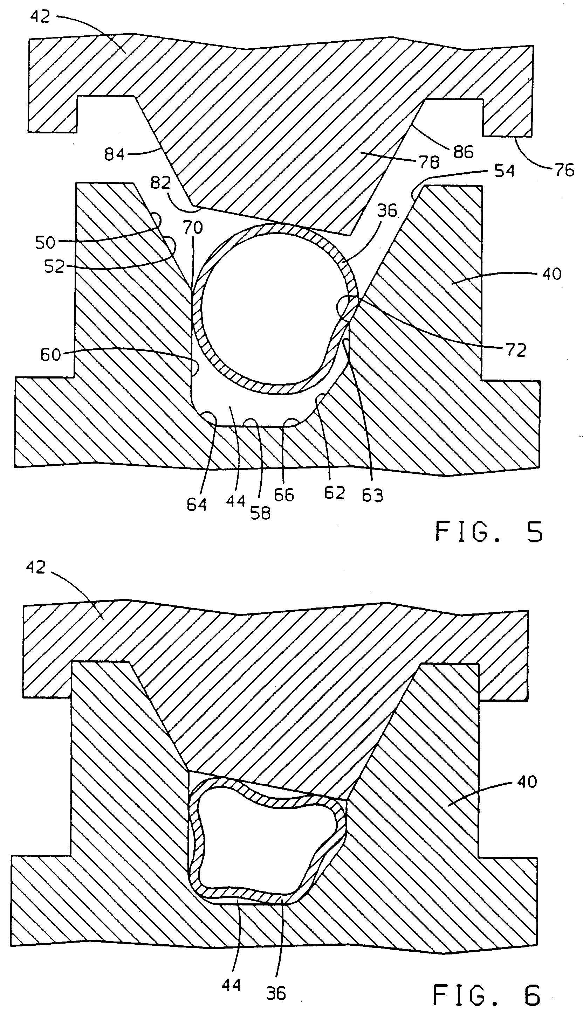

Figure 6 shows the upper die 42 fully lowered upon the lower die 40 so that the tubular blank 36 has been completely forced into the forming portion of the forming cavity 44 without any pinching of the tubular blank 36 between the upper and lower dies.

The lid wall 82 of the upper die 42 co-operates with the bottom wall 58 and side walls 60 and 62,63 of the lower die 40 to define a box shape (cavity portion) in which the tubular blank 36 is captured. As seen in Figure 6, the tubular blank 36 has been somewhat crushed and collapsed in an inward irregular manner during its forced placement into the box shape forming portion of the forming cavity 44 of the lower die 40.

Figure 7 shows the application of hydraulic pressure to the interior of the tubular blank 36 to force the tubular blank outwardly to its final shape of Figure 2. During this outward expansion, the circumference of the tubular blank 36 is expanded about five percent beyond the circumference of the original tubular blank 36. The application of the internal hydraulic pressure forces the bottom wall 18 and the side walls 20 and 22 into engagement with the corresponding bottom and side walls 58, 60, and 62,63 of the lower die 40. Likewise, the hydraulic pressure forces the wall of the tubular blank 36 to form the rounded corners 28 and 30 by forcing the tubular blank into the rounded corners 64 and 66 of the lower die 40.

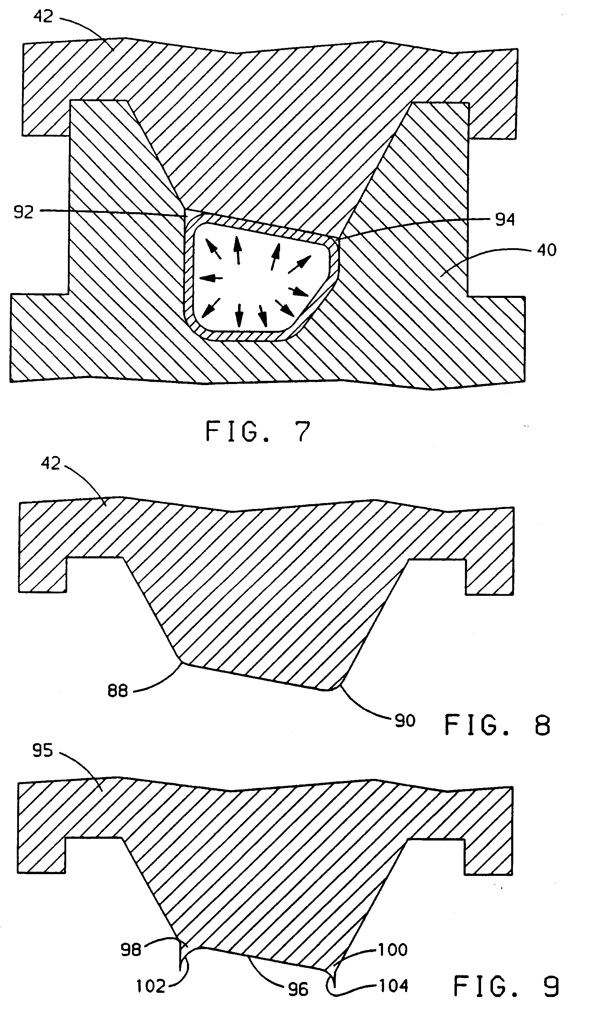

As best seen in Figure 7, the top wall 16 is expanded upwardly into engagement with the lid wall 82 of the upper die 42. Figures 7 and 8 show the preferred arrangement of the upper die 42 in which the corners of the die at the intersection of the lid wall 82 and ram walls 84 and 86 are connected by smoothly rounded corners 88 and 90. These rounded corners 88 and 90 are desirable for ease of manufacture and maintenance of the upper die 42. However, as shown in Figure 7, corner voids 92 and 94 remain even after the tubular member 10 has been fully expanded to the finished shape.

Accordingly, it will be appreciated that the rounded upper corners 24 and 26 of the tubular member 10 are provided by the resistance of the tube to expansion, rather than the forced expansion of the tube into the void spaces 92 and 94. This rounding of the upper corners 24 and 26 is thus provided by using an internal hydraulic pressure which is great enough to forcibly expand the tubular blank 36 fully into contact with the walls of the lower die 40, and yet not so great as to expand the tubular blank into the void spaces 92 and 94.

Figure 8 shows an enlarged view of the preferred upper die 42 and is seen to have the convexly curved rounded corners 88 and 90 which are easy to manufacture and maintain. In contrast, Figure 9 shows an alternative upper die 95 in which the lid wall 96 of the upper die 95 has pointed corners 98 and 100 which will project into the void space 92 and 94 shown in Figure 7. Accordingly, using the upper die 95 of Figure 9, the final hydroformed shape of the tubular member 10 would be obtained by expanding the tubular blank into contact with the lid wall 96 while the contact of the tubular blank with the concave curves 102 and 104 of the pointed corners 98 and 100 will form the rounded corners 24 and 26 of the tubular member 10.

In comparing Figures 8 and 9 it will be appreciated that the die shape of Figure 8 will be substantially easier to manufacture and maintain than would be the more complex die shape of Figure 9.

Thus it is seen that the present invention provides a new and improved hydroforming method and die apparatus particularly suited to forming tubular members having a width which is less than the overall width of the diameter of the tubular blank from which the tubular member is to be hydroformed.

In addition, the present invention provides a new and improved hydroforming die apparatus particularly suited for hydroforming tubular blanks which have been bent to a U-shape or other shape approximating the shape of the desired final product. In particular, as best seen in Figure 4, the tubular blank 36 for making the U-shaped tubular member 10 of Figure 1 has been bent to a U-shape precisely to overlie the forming cavity 44 so that the circumference of the tubular blank 36 rests upon the lower die 40 at the apex points 70 and 72. However, in conventional tube bending techniques some variation will exist and the tubular blank 36 may align with forming cavity 44 in a less precise alignment so that at various points along its length the tubular blank may rest upon any one or more of the funnel walls 52 or 54, or the apex points 70 and 72. In any case, the angled funnel walls 52,54 will function to guide the tubular blank 36 into its proper alignment with the forming cavity 44 during the lowering of the upper die 42 onto the tubular blank. In addition, although the funnel walls 52 and 54 will guide the tubular blank into the forming cavity 44 in a pinch-free manner, it may nonetheless be desirable to prefill the tubular blank 36 with fluid at a certain level of pressure (perhaps 690-6900 kPa [100-1000 psi]) so that the hydraulic fluid will resist a severe collapse of the tubular blank 36 as might occur when the upper die 42 reaches its fully closed position of Figure 6.

It will also be understood that the present invention is not limited to an upper die having a ram with no cavity. For example, the flat lid wall 82 of Figure 4 can be machined to define a concave recess when appropriate to the shape of the desired final product.

## Claims

1. A method of forming a tubular member (10) having a polygon cross-section from a tubular blank (36) having a substantially round cross-section, comprising the steps of providing first and second dies (40,42) having an open position to permit the placement of the tubular blank (36) therebetween and a closed position defining therebetween a cavity portion having the approximate cross-sectional shape of the tubular member (10), the first die (40) having a cavity (44) with an overall depth greater than the desired depth (h) of the tubular member (10), and including a forming portion having a width equal to the width (w) of the tubular member (10) to be formed and less than the diameter of the tubular blank (36) and a depth equal to the depth of the tubular member (10), and an entry portion having walls (52,54) spaced at a width greater than the width of the tubular member (10) and converging angularly to the width of the forming portion, the cavity portion being defined by the forming portion of the cavity and the second die (42) in said closed position; positioning the tubular blank (36) in the entry portion; moving the first (40) and second dies (42) relative to one another from the open position to the closed position whereby the tubular blank (36) is engaged and forced into the cavity portion by the second die (42), the walls (52,54) of the entry portion engaging and guiding the collapse of the tubular blank (36) as the tubular blank (36) is forced into the cavity portion; and applying internal pressure to the collapsed tubular blank (36) with the dies (40,42) in the closed position to cause the expansion of the collapsed tubular blank (36) to the cross-sectional shape defined between the dies (40,42).

2. A method as claimed in Claim 1, wherein the second die (42) has a lid wall (82) which in the closed position of the dies (40,42) co-operates with the forming portion of the cavity (44) of the first die (40) to define the cavity portion, the lid wall (82) engaging the tubular blank (36) to force the tubular blank (36) into the forming portion during closing of the dies (40,42).

3. A method as claimed in Claim 1 or Claim 2, wherein the step of applying internal pressure is at a predetermined pressure level which does not forcibly expand the collapsed tubular blank (36) into full contact with the walls defining the cross-sectional shape between the dies (40,42) in the closed position.

4. A die assembly for use in the method of Claims 1 to 3 comprising a first die (40) and a co-operating second die (42), the first die having a cavity (44) with an overall depth greater than the desired depth (h) of a tubular member (10) to be formed in the die assembly, the cavity including a forming portion having a width equal to the width (w) of the tubular member (10) to be formed and less than the diameter of a tubular blank (36) to be formed into the tubular member and a depth equal to the depth (h) of the tubular member (10), and an entry portion having walls (52,54) spaced at a width greater than the width of the tubular member (10) and converging angularly to the width of the forming portion, wherein the second die (42) has a lid wall (82), the lid wall (82) defining with the forming portion a cavity portion having a cross-section substantially the same as the desired cross-section of the tubular member (10) when the dies (40,42) are moved together into a closed position.

5. A die assembly as claimed in Claim 4, wherein the second die (42) has a ram (78) including the lid wall (82).

6. A die assembly as claimed in Claim 4 or Claim 5, wherein the forming portion of the cavity (44) in the first die (40) comprises a bottom wall (58) connected to side walls (60,62,63) by rounded corners (64,66); and wherein, in the closed position, the lid wall (82) defines with the side walls corners (92,94) which are left void on formation of the tubular member (10).

## Patentansprüche

1. Verfahren zum Formen eines rohrförmigen Elementes (10) mit einem polygonen Querschnitt aus einem rohrförmigen Rohling (36) mit einem im wesentlichen runden Querschnitt mit den Schritten, daß erste und zweite Gesenke (40, 42) vorgesehen werden, die eine offene Position, um das Anordnen des rohrförmigen Rohlings (36) dazwischen zu erlauben, und eine geschlossene Position aufweisen, die dazwischen einen Hohlraumteil mit der ungefähren Querschnittsform des rohrförmigen Elementes (10) definiert, wobei das erste Gesenk (40) einen Hohlraum (44) mit einer Gesamttiefe aufweist, die größer als die gewünschte Tiefe (h) des rohrförmigen Elementes (10) ist, und einen Formungsteil, der eine Breite, die gleich der Breite (w) des zu formenden rohrförmigen Elementes (10) und kleiner als der Durchmesser des rohrförmigen Rohlings (36) ist, und eine Tiefe aufweist, die gleich der Tiefe des rohrförmigen Elementes (10) ist, und einen Eintrittsteil umfaßt, der Wände (52, 54) aufweist, die mit einer Breite beabstandet sind, die größer als die Breite des rohrförmigen Elementes (10) ist, und die winklig zur Breite des Formungsteils konvergieren, wobei der Hohlraumteil durch den Formungsteil des Hohlraums und das zweite Gesenk (42) in der geschlossenen Position definiert ist; daß der rohrförmige Rohling (36) in dem Eintrittsteil positioniert wird; daß die ersten (40) und zweiten Gesenke (42) relativ zueinander von der offenen Position zu der geschlossenen Position bewegt werden, wodurch der rohrförmige Rohling (36) mit dem zweiten Gesenk (42) in Eingriff gelangt und durch das zweite Gesenk (42) in den Hohlraumteil gedrückt wird, wobei die Wände (52, 54) des Eintrittsteils mit dem rohrförmigen Rohling (36) in Eingriff gelangen und das Falten des rohrförmigen Rohlings (36) führen, während der rohrförmige Rohling (36) in den Hohlraumteil gedrückt wird; und daß Innendruck an den gefalteten rohrförmigen Rohling (36) angelegt wird, wobei die Gesenke (40, 42) sich in der geschlossenen Position befinden, um die Ausdehnung des gefalteten rohrförmigen Rohlings (36) zu der Querschnittsform hervorzurufen, die zwischen den Gesenken (40, 42) definiert ist.

2. Verfahren nach Anspruch 1,
worin das zweite Gesenk (42) eine Deckelwand (82) aufweist, welche in der geschlossenen Position der Gesenke (40, 42) mit dem Formungsteil des Hohlraums (44) des ersten Gesenks (40) zusammenarbeitet, um den Hohlraumteil zu definieren, wobei die Deckelwand (82) mit dem rohrförmigen Rohling (36) in Eingriff gelangt, um den rohrförmigen Rohling (36) in den Formungsteil während des Schließens der Gesenke (40, 42) zu drücken.

3. Verfahren nach Anspruch 1 oder 2,
worin der Schritt des Anlegens von Innendruck bei einem vorbestimmten Druckpegel stattfindet, welcher den gefalteten, rohrförmigen Rohling (36) nicht zwangsweise in vollem Kontakt mit den Wänden ausdehnt, die die Querschnittsform zwischen den Gesenken (40, 42) in der geschlossenen Position definieren.

4. Gesenkaufbau zur Verwendung in dem Verfahren der Ansprüche 1 bis 3 mit einem ersten Gesenk (40) und einem zusammenarbeitenden zweiten Gesenk (42), wobei das erste Gesenk einen Hohlraum (44) mit einer Gesamttiefe aufweist, die größer als die gewünschte Tiefe (h) eines in dem Gesenkaufbau zu formenden rohrförmigen Elementes (10) ist, der Hohlraum einen Formungsteil mit einer Breite, die gleich der Breite (w) des zu formenden rohrförmigen Elementes (10) und kleiner als der Durchmesser eines zu dem rohrförmigen Element zu formenden rohrförmigen Rohlings (36) ist, und einer Tiefe, die gleich der Tiefe (h) des rohrförmigen Elementes (10) ist, und einen Eintrittsteil umfaßt, der Wände (52, 54) aufweist, die mit einer Breite beabstandet sind, die größer als die Breite des rohrförmigen Elementes (10) ist, und die winklig zur Breite des Formungsteils konvergieren, worin das zweite Gesenk (42) eine Deckelwand (82) aufweist, wobei die Deckelwand (82) mit dem Formungsteil einen Hohlraumteil definiert, der einen Querschnitt aufweist, der im wesentlichen der gleiche wie der gewünschte Querschnitt des rohrförmigen Elementes (10) ist, wenn die Gesenke (40, 42) zusammen in eine geschlossene Position bewegt werden.

5. Gesenkaufbau nach Anspruch 4,
worin das zweite Gesenk (42) einen Stößel (78) aufweist, der die Deckelwand (82) umfaßt.

6. Gesenkaufbau nach Anspruch 4 oder 5,
worin der Formungsteil des Hohlraums (44) in dem ersten Gesenk (40) eine Unterseitenwand (58) umfaßt, die mit Seitenwänden (60, 62, 63) durch gerundete Ecken (64, 66) verbunden ist; und worin in der geschlossenen Position die Deckelwand (82) mit den Seitenwänden Ecken (92, 94) definiert, welche bei der Formung des rohrförmigen Elementes (10) leer gelassen werden.

## Revendications

1. Procédé pour réaliser un élément tubulaire (10) présentant une section polygonale, à partir d'une ébauche tubulaire (36) ayant une section sensiblement ronde, comprenant les étapes consistant à :
- réaliser des première et seconde matrices (40, 42) possédant une position ouverte pour permettre de placer l'ébauche tubulaire (36) entre celles-ci, et une position fermée délimitant entre celles-ci une partie formant cavité possédant sensiblement la forme en coupe de l'élément tubulaire (10), la première matrice (40) comportant une cavité (44) d'une profondeur totale plus grande que la hauteur souhaitée (h) de l'élément tubulaire (10) et comprenant une partie de formage possédant une largeur égale à la largeur (w) de l'élément tubulaire (10) à réaliser et inférieure au diamètre de l'ébauche tubulaire (36) et une profondeur égale à la profondeur de l'élément tubulaire (10), et une partie formant entrée comportant des parois (52, 54) espacées d'une largeur plus grande que la largeur de l'élément tubulaire (10) et convergeant en angle en direction de la largeur de la partie de formage, la partie formant cavité étant délimitée par la partie de formage de la cavité et la seconde matrice (42) dans ladite position fermée,
- placer l'ébauche tubulaire (36) dans la partie d'entrée,
- déplacer les première (40) et seconde (42) matrices l'une part rapport à l'autre de la position ouverte à la position fermée, si bien que l'ébauche tubulaire (36) est mise en contact avec, et est poussée dans, la partie formant cavité par la seconde matrice (42), les parois (52, 54) de la partie d'entrée venant porter contre l'ébauche tubulaire (36) et guidant l'affaissement de celle-ci lorsque l'ébauche tubulaire (36) est introduite en force dans la partie formant cavité, et
- appliquer une pression interne à l'ébauche tubulaire (36) affaissée avec les matrices (40, 42) en position fermée pour produire l'élargissement de l'ébauche tubulaire affaissée (36) sous la forme en coupe délimitée entre les matrices (40, 42).

2. Procédé selon la revendication 1, dans lequel la seconde matrice (42) comporte une paroi (82) formant couvercle qui, dans la position fermée des matrices (40, 42), collabore avec la partie de formage de la cavité (44) de la première matrice (40) pour délimiter la partie formant cavité, la paroi (82) formant couvercle venant porter contre l'ébauche tubulaire (36) pour pousser l'ébauche tubulaire (36) à l'intérieur de la partie de formage pendant la fermeture des matrices (40, 42).

3. Procédé selon la revendication 1 ou la revendication 2, dans lequel l'étape consistant à appliquer une pression interne se déroule à un niveau de pression prédéterminé qui ne permet pas d'élargir en force l'ébauche tubulaire affaissée (36) pour la mettre complètement en contact avec les parois délimitant la forme en coupe entre les matrices (40, 42) en position fermée.

4. Ensemble de matrices destiné à être utilisé dans le procédé selon les revendications 1 à 3, comprenant une première matrice (40) et une seconde matrice (42) collaborant, la première matrice comportant une cavité (44) d'une profondeur totale plus grande que la profondeur souhaitée (h) d'un élément tubulaire (10) à réaliser dans l'ensemble de matrices, la cavité comprenant une partie de formage ayant une largeur égale à la largeur (w) de l'élément tubulaire (10) à réaliser, et inférieure au diamètre d'une ébauche tubulaire (36) à mettre en forme d'élément tubulaire et une profondeur égale à la profondeur (h) de l'élément tubulaire (10), et une partie formant entrée comportant des parois (52, 54) espacées d'une largeur plus grande que la largeur de l'élément tubulaire (10) et convergeant en angle en direction de la largeur de la partie de formage, dans lequel la seconde matrice (42) comporte une paroi (82) formant couvercle, la paroi (82) formant couvercle délimitant avec la partie de formage une partie formant cavité possédant une section sensiblement identique à la section souhaitée de l'élément tubulaire (10) lorsque les matrices (40, 42) sont déplacées l'une par rapport à l'autre pour être mises en position fermée.

5. Ensemble de matrices selon la revendication 4, dans lequel la seconde matrice (42) comporte un plongeur (78) comprenant la paroi (82) formant couvercle.

6. Ensemble de matrices selon la revendication 4 ou 5, dans lequel la partie de formage de la cavité (44) formée dans la première matrice (40) comprend une paroi (58) formant fond reliée à des parois latérales (60, 62, 63) par des coins arrondis (64, 66), et dans lequel, en position fermée, la paroi (82) formant couvercle délimite avec les parois latérales, des coins (92, 94) qui sont laissés vides lors de la réalisation de l'élément tubulaire (10).
